# EUROPEAN PATENT APPLICATION

(11) **EP 4 183 896 A1**
(43) Date of publication of application: **24.05.2023**
(21) Application number: 21208945.2
(22) Date of filing: 18.11.2021
(51) Int. Cl.: C25B 1/04, C25B 9/60, C25B 9/70, C25B 15/027, C25B 15/08, C25B 9/77

(54) **ELECTROLYSIS UNIT FOR OBTAINING GASEOUS PRODUCTS**

(71) Applicant: Industrie De Nora S.P.A., 20134 Milano (IT)
(72) Inventor: CARRETTIN, Leonello, 20134 Milano (IT)
(74) Representative: Reitstötter Kinzebach

(57) **Abstract**

The intervention relates to an electrolysis unit A fluid manifold system is feeding electrolytic solution into the electrolytic cells and discharging the electrolytic solution out of the electrolytic cells. The cavity of an expandable closing means is pressurized so that its shell expands and the volume of the cavity increases. The expandable closing means is arranged within the fluid manifold system, so that the fluid manifold system is open for the passage of electrolytic solution if the expandable closing means is in a depressurized state and the fluid manifold system is closed for the passage of electrolytic solution if the expandable closing means is in a pressurized state.

## Description

### FIELD OF THE INVENTION

The present invention relates to an electrolysis unit in which an electrolyte (such as water or brine) is electrolyzed to obtain gaseous products, such as oxygen, hydrogen and chlorine. Moreover, the invention relates to a process in which water is electrolyzed to obtain oxygen and hydrogen.

### BACKGROUND OF THE INVENTION

The production of hydrogen and oxygen by electrolysis of aqueous solutions is a well-known technique. Technologies based on the electrolysis of acidic or alkaline solutions have been used in the past, the latter due to the lower aggressiveness of electrolytes, which provide a wider range of metallic materials for their production.

Electrolyzers can be used advantageously in conjunction with renewable energy sources such as solar power. Solar power is used to generate an electric current that has to be applied to the electrolyzer for the separation of water into its components hydrogen and oxygen. With such a configuration, it is necessary to shut down the electrolyzer at night, since renewable solar energy is not available.

During this period, when the polarization is switched-off, the coatings of anode and cathode are unprotected and could be damaged by reverse currents originated from stray currents that flow through the drain manifold, which connects all the cells of the electrolyzer hydraulically.

In JP5876811 B2 a reverse current prevention method is described for an ion exchange membrane electrolytic cell which includes an anode chamber accommodating an anode, a cathode chamber accommodating a cathode, an anolyte supplying manifold supplying an anolyte to the anode chamber, and a catholyte supplying manifold supplying a catholyte to the cathode chamber. After the operation stop of the ion exchange membrane electrolytic cell, a low conductive material having a lower electrical conductivity than that of the anolyte or catholyte is poured into at least one of an anolyte supply pipe supplying the anolyte from an anolyte tank to the anolyte supplying manifold and a catholyte supply pipe supplying the catholyte from a catholyte tank to the catholyte supplying manifold.

In the current state of the art, a closing system with valves is used to seal each cell and avoid possible stray currents. This method requires each of the individual cells being closed separately with valves in front of each inlet. Accordingly, the execution for a larger number of cells is complex and time-consuming.

It is therefore the object of the present invention to provide a system and a process with an improved closing construction for the protection of the coatings of anode and cathode of an electrolyte in an electrolysis unit against damage by stray currents when the electrolyzer is shut down.

### SUMMARY OF THE INVENTION

The above-described object has been achieved by an electrolysis unit as defined in claim 1, and a process for an electrolysis as defined in claim 9. Advantageous configurations and developments are apparent from the dependent claims.

According to a first aspect of the present invention, the electrolysis unit, comprises a plurality of electrolytic cells each having an anode, a cathode and an ion-exchange diaphragm dividing the electrolytic cell into an anodic and a cathodic compartment. The unit also comprises a fluid manifold system having fluid conduits for feeding the electrolytic solution into the electrolytic cells and for discharging the electrolytic solution out of the electrolytic cells. Furthermore, it comprises an expandable closing means having a fluid-tight shell enclosing a cavity, said fluid-tight shell having a pressure port; and a pressure unit connected with the pressure port for pressurizing the cavity so that the fluid-tight shell expands and the volume of the cavity increases. The expandable closing means is arranged within the fluid manifold system, so that the fluid manifold system is open for the passage of electrolytic solution if the expandable closing means is in a depressurized state and the fluid manifold system is closed for the passage of electrolytic solution if the expandable closing means is in a pressurized state.

Electrolyte is fed via fluid conduits to the anode or cathode chambers of the electrolytic cells providing an alkaline solution supply and, on the opposite side of the cell, drainage through them. The expandable closing means is placed inside such conduit prior to commissioning the electrolysis cell. The expandable closing means has a pressure port that may be addressed via a hose connected to a pressure unit outside the system. During operation, i.e. when alkaline water electrolysis is performed, the expandable closing means is deflated, which corresponds to a depressurized state. This means that the cavity enclosed by the closing means is compressed by the surrounding electrolyte.

This arrangement of the expandable closing means has the advantage that during a shutdown of the unit no stray currents may be formed between the cells, avoiding reverse currents and thus avoiding damaging the coatings of anode and cathode. The operating lifetime of the unit is thus increased, and material and maintenance costs can be reduced. The expandable closing means has the advantage over the installation of simple valves that it can be easily controlled from the outside by activating the pressure unit. Depending on the arrangement of the expandable closing means, several conduits can be isolated at the same time instead of closing them all individually with a valve. This results in time savings and furthermore no complex conversion of the unit is necessary when switching to the active mode of the electrolysis unit. The expandable closing means can simply be deflated by bringing it into the depressurized state. Opening and closing of the conduits with rapid frequencies can thus easily be carried out. The unit comprising the expandable closing means allows a process that is reversible and can be repeated over and over again.

According to another embodiment, the unit can be used for alkaline water electrolysis. An electrolytic solution of alkaline water is electrolyzed to obtain oxygen and hydrogen.

According to a further configuration of the electrolysis unit, at least one fluid conduit provides a fluid connection from one electrolytic cell to another electrolytic cell. Therefore, an electrolysis unit built of several cells can be supplied via a common electrolyte manifold system.

According to an embodiment of the electrolysis unit, the expandable closing means is arranged in at least one of the fluid conduits directly in front of an inlet of an electrolytic cell. In this case, in the pressurized, i. e. inflated, state of the expandable closing means, there is therefore no longer any connection between the cell in whose direct supply conduit the expandable closing means is installed and the neighbouring conduits. The cell is thus protected against stray currents, which could otherwise propagate via the electrolyte. Due to the simple design of the expandable closing means, it can be used spatially flexibly. By placing it into the direct supply conduit of the cell, it is possible to only block individual cells of the unit. For instance, this can be beneficial during a shutdown of the unit or a part thereof.

A closing system for the complete unit may be achieved by placing a plurality of the expandable closing means into the direct supply conduits at each of the individual cells' inlet, which allows an individual isolation of these cells. Nevertheless, by connecting pressure hoses from the individual pressure ports of the expandable closing means to the pressure unit, e. g. a pressure pump, several closing means can be inflated or deflated at the same time.

According to another embodiment of the electrolysis unit, the fluid manifold system comprises a main conduit wherein at least one fluid conduit branches off from the main conduit and wherein said expandable closing means is arranged in the main conduit.

For example, the main conduit is located in the lower part or in the downstream part of the fluid manifold system of the electrolysis unit and delivers an alkaline solution to the vicinity of the electrolysis unit. It feeds the fluid conduits branching off from this main conduit, leading to the individual cells that are electrically connected in series.

The expandable closing means may be pre-installed into the main conduit. When being inflated, the expandable closing means completely expands into the main conduit of the unit and blocks all fluid conduits branching off from the main conduit to the electrolytic cells. Thus, the electrolyte supply of the whole unit can be blocked at once rather than having to control the supply of each individual cell separately. In this way, all cells are isolated and therefore no stray currents can be formed in the entire unit. This subsequently prevents the formation of reverse currents in the individual cells.

Placing a single expandable closing means in the main conduit can be advantageous when performing maintenance work. The individual cells are still completely independent of the installation of the expandable closing means. If the unit needs to be maintained, only one closing device is affected and only the main conduit is concerned. The setup is material- and thus cost-saving and simplifies the user application. One closing device for the complete unit is provided being operated by inflating and deflating the expandable closing means being placed into the main conduit.

The expandable closing means can be operated via an external gas supply system. For this purpose, the pressure port is provided on the fluid-tight shell of the expandable closing means, which may be connected to a hose. This hose leads out of the manifold system to the pressure unit.

The pressure unit may be applied to pump ambient air directly through the supply system into the cavity of the expandable closing means. Alternatively, the pressure unit is connected to a tank in which nitrogen is stored and which can provide the system with the required fluid for bringing the expandable closing means into the pressurized state.

It is a cost-effective option to fill the cavity with an easily accessible gas such as nitrogen or air. Furthermore, the filling and emptying process is uncomplicated, fast and error-resistant. In the event of an accident or leakage of the gas, no major danger is to be assumed, additional safety measures are therefore not necessary.

According to an embodiment of the invention, the expandable closing means comprises ballast components holding the expandable closing at the bottom of the fluid manifold system when deflated.

In particular, the expandable closing means remains in the conduit permanently, i.e. also during the electrolysis process. It is therefore important that the deflated expandable closing means does not obstruct the electrolysis process. On the one hand, the depressurized expandable closing means should have a small volume and block only a small part of the cross-sectional area of the conduit. On the other hand, the expandable closing means must not move in the fluid manifold system. This is especially important when the expandable closing means is re-inflated. It has to be ensured that the expandable closing means is still at the same place, e. g. placed directly in front of the fluid conduits branching off from the main conduit so that it can block them during re-inflation. Furthermore, in the depressurized state, floating of the expandable closing means inside the manifold has to be prevented which could obstruct the inlet openings. To ensure that the fluid-tight shell of the depressurized expandable closing means does not move in the conduit and cause unfavourable positioning, ballast components are used in this embodiment. In this way, the fluid-tight shell of the depressurized expandable closing means is attached to the lower wall of the fluid conduits and does not fold up. The ballast component is a metal rod inserted in the cavity of the expandable closing means with a length just shorter than the expandable closing means to be contained therein.

In an embodiment of the invention, the fluid-tight shell of the expandable closing means is an electric isolator.

To effectively prevent stray currents, in this embodiment, not only a hydraulic barrier, by separating electrolyte-containing compartments, but also an electric current flow barrier is implemented. The fluid-tight shell is designed of a material that inhibits stray currents from propagating through it. This is best achieved by using an electric isolator. In addition, the material can be chosen to be elastic, UV-, temperature- and ageing-resistant as well as tear-resistant. Possible elastomers materials are chlorosulfonated polyethylene (CSM), ethylene propylene diene monomer (EPDM), fluorine rubber (FKM) or others known in the art. The rubber, for example EPDM, may comprise metallic parts such a nickel parts. An insulating material may likewise be used for all other components, such as the pressure port and the ballast elements.

According to an embodiment of the invention, the pressure unit is designed to depressurize the expandable closing means by pumping gas out of the cavity via a retraction valve of the pressure port.

Electrolysis units can be constructed in various ways. Typical designs are the atmospheric electrolyzer and electrolyzer in pressure stack design.

In an embodiment of the invention, the electrolysis unit is an atmospheric electrolyzer and/or electrolyzer with pressurized stack design with internal manifolds wherein the expandable closing means is placed into the fluid manifold system of the atmospheric electrolyzer and/or the electrolyzer with pressurized stack design.

In an atmospheric electrolyzer, individual electrolysis cells are grouped into cell units by placing them next to each other. The manifold system for delivering the electrolyte to the cells is external. A main manifold carries the electrolysis medium to the cell unit. The main manifold then branches out and leads to the individual cells. Also the outlet is external, through pipes leading away from the individual cells.

An electrolyzer with a pressurized stack design comprises internal manifolds. A pressurized arrangement of several cell components is flowed through by one or more electrolysis pipes. The discharge of the electrolyte also takes place through pipes penetrating the system.

The problem of stray currents and reverse currents occurring when the electrolysis units are switched off is a general problem. The stray currents form either in the external manifolds or in the internal manifolds and equally lead to reverse currents in the cell. The structural component of the conduits through which the electrolyte is fed to the electrolysis unit or into the individual cells is common to both systems; merely the size and shape may vary. Advantageously, the expandable closing means can be manufactured and installed in different sizes and lengths. Therefore, it is suitable for different electrolyzer designs.

Furthermore, the invention relates to a process for the operation of an electrolysis unit. It comprises the following simultaneous or sequential steps: feeding an electrolytic solution via a fluid manifold system with fluid conduits into the electrolytic cell and discharging the electrolytic solution out of the electrolytic cells; and pressurizing an expandable closing means being placed into the fluid manifold system, wherein said expandable closing means has a fluid-tight shell enclosing a cavity and having a pressure port, via the pressure port using a pressure unit that is connected to the pressure port so that the fluid-tight shell expands and the volume of the cavity increases until the expandable closing means is in a pressurized state in which the fluid manifold system is closed for the passage of electrolytic solution.

The process according to the invention is particularly intended to use the electrolysis unit according to the invention. It therefore has the same advantages as the system according to the invention.

According to an embodiment of the process, the expandable closing means is brought into the pressurized state during shutdown of the electrolysis unit.

According to an embodiment of the process, the cavity of the expandable closing means is pressurized with compressed nitrogen or compressed air. This is a cost-effective option to fill the cavity with an easily accessible gas such as nitrogen or air.

According to an embodiment of the process, the expandable closing means is deflated during activity of the electrolysis unit thereby bringing it into a depressurized state in which the fluid manifold system is open for the passage of electrolytic solution.

According to an embodiment of the process, the expandable closing means remains in the fluid conduit during activity of the electrolysis unit. In particular, the expandable closing means is pre-installed.

As the inflation and deflation of the expandable closing means has to be activated and deactivated repeatedly, it would be time-consuming and impractical to install and remove it every time. However, the electrolysis process must not be restricted by an additional component. Due to the deflating of the expandable closing means, and the associated reduction in volume and blocked cross section in the conduit, it can be realised that the expandable closing means can remain in the fluid conduit without disturbing the electrolysis process. The electrolyte can move freely in the conduit; the deflated expandable closing means only occupies a small area.

To enable electrolysis, an electrical voltage must be applied to the electrolysis unit. If it is necessary to switch the electrolysis unit off, for example if no voltage can be applied due to the lack of solar power overnight, the coatings of anode and cathode have to be protected from residual reverse currents flowing through the fluid manifold system and fluid conduits. In this case, an overnight shutdown may be carried out. In a first step, it is necessary to maintain the polarization rectifier switched-on for a few hours and fill the electrolyzer with cold electrolyte until the temperature at the discharge exit drops below a specified threshold temperature. The polarization rectifier can then be switched off and the electrolyte circulation is stopped. From this moment on, stray currents may appear which lead to reverse currents in the cells damaging the surfaces of the anodes and cathodes. For this reason, the expandable closing means is activated, i. e. the cavity is pressurized so that the expandable closing means is inflated meaning it is brought into the pressurized state.

The expandable closing means in the fluid manifold system is inflated at a sufficient pressure to expand completely within the manifold. The cavity of the expandable closing means is filled with pressurized gas via the pressure port until the outer walls of the expandable closing means seal against the inner walls of the fluid conduits. This results in a hydraulic isolation of the compartments in front of and behind the expandable closing means as no electrolyte solution can pass through any more. In particular, the expandable closing means is designed to prevent stray currents when the electrolysis process is shut down.

According to a further configuration of the process, the expandable closing means is depressurized when the electrolyzer is activated. Therefore, the expandable closing means may remain in the system when electrolysis is taking place. Reversible use and fast, uncomplicated switching between the pressurized and depressurized states may therefore be achieved. Before restarting the electrolyte flow, the expandable closing means must be deflated. This is done by pumping out the previously injected gas. The same pressure unit and pressure port used for the inflation step can be used for the deflation step. This ensures the setup to remain easy to handle. In particular, the used gas can be collected in a tank and be reused if necessary.

According to an embodiment of the process, the temperature of the electrolytic solution is measured, and, for a shutdown of the electrolysis unit, the pressure unit is activated, e. g. via a control unit, after the electrolyte solution has cooled down below a defined temperature. The expandable closing means is then inflated until a certain threshold pressure value is reached. For an operation of the electrolysis unit the expandable closing means is deflated and the electrolysis process is started.

According to an embodiment of the process, the electrolysis unit is operated with an electrolytic solution of alkaline water.

In particular, the process is again operated at a predefined point in time, for instance with the onset of sunlight.

### EXAMPLES

Embodiments of the present invention are now described with reference to the drawings.
- Figure 1: shows a side view of an embodiment of the electrolysis unit of the present invention;
- Figure 2: shows a cross section of the fluid manifold system of the embodiment shown in Fig. 1; and
- Figure 3: shows a flow diagram of an embodiment of the process of the present invention.

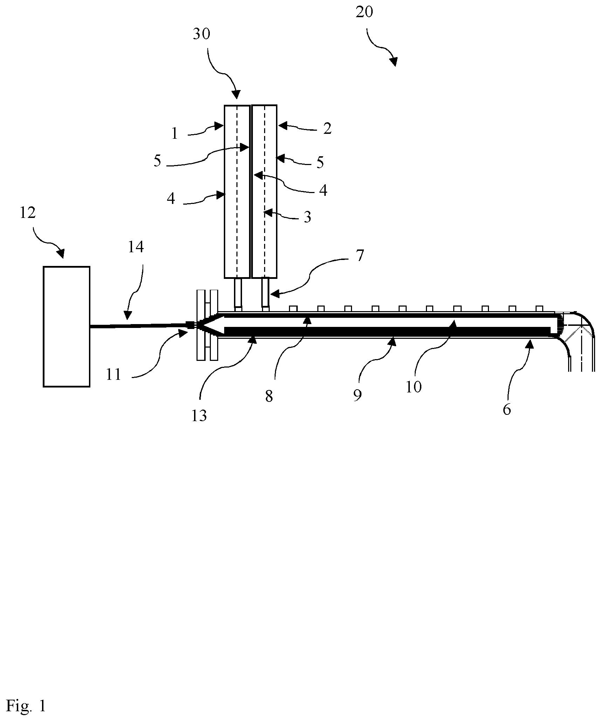

With reference to Figures 1 to 3, an embodiment of an electrolysis unit 20 according to the invention is described:
The electrolysis unit 20 is sub-divided into individual electrolysis cells 30. Figure 1 only depicts two of these individual electrolysis cells 30. An electrolysis cell 30 is built of an anodic compartment and a cathodic compartment, which are separated by an ion exchange diaphragm 3. The anodic compartment has a liquid chamber delimited at the side opposite the diaphragm 3 by an anodic wall 4. Inside the anodic compartment, an anode 1 built of a substrate made of a mesh or other porous metal structure is present. In the anodic compartment, oxygen is produced and discharged in form of bubbles within the electrolyte phase. The cathodic compartment is a gas chamber delimited at the side opposite the diaphragm 3 by a cathodic wall 5. The cathodic product is hydrogen.

A fluid manifold system comprising a main conduit 6 and a plurality of fluid conduits 7 feeds the electrolytic solution into the electrolysis cells 30 and discharges the electrolytic solution out of the electrolytic cells 30. The main conduit 6 of the fluid manifold system 6 enables the electrolyte to reach the vicinity of the electrolysis cells 30. Smaller fluid conduits 7 are branching off from the main conduit 6 and are connected with the individual cells 30 to supply them with electrolyte.

Such electrolysis unit 20 is known per se. It is designed to electrolyze an electrolytic solution of alkaline water to obtain oxygen and hydrogen. It may be an atmospheric electrolyzer or an electrolyzer with pressurized stack design with internal manifolds.

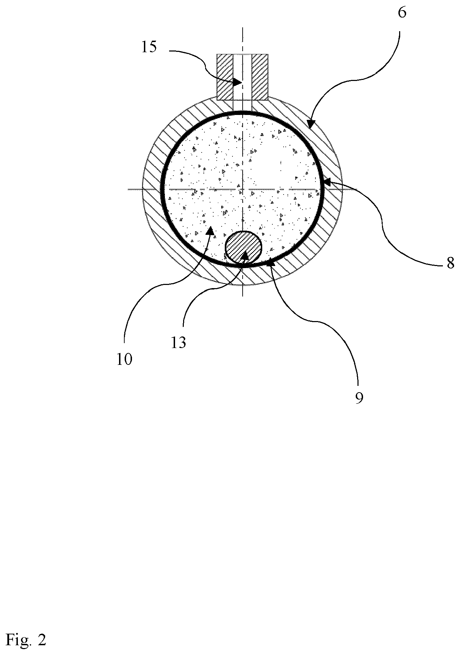

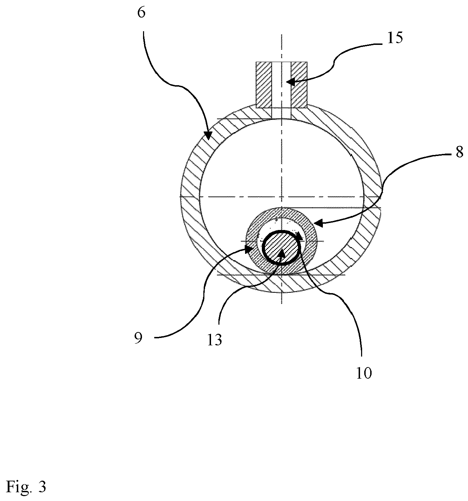

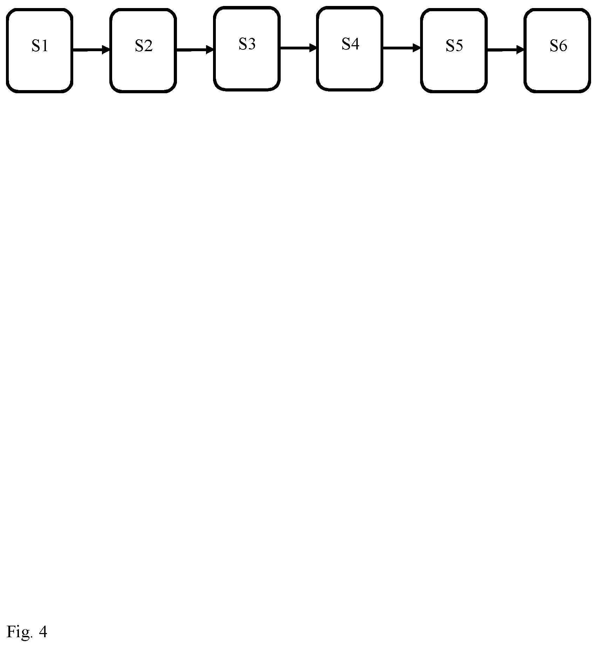

The electrolysis unit according to the invention comprises an expandable closing means 8 that is placed into the fluid manifold system as depicted in Figure 1. The expandable closing means 8 has a fluid-tight shell 9 and encloses a cavity 10. It is connected to an external pressure unit 12 via a pressure port 11 and a hose 14. The expandable closing means 8 can be brought into a pressurized state as shown in Figures 1 and 2 and into a depressurized state as shown in Figure 3.

In the pressurized state, the pressure unit 12, which may be a pump, compresses ambient air or nitrogen that may be stored in an external tank and supplies it via the hose 14 to the pressure port 11 of the expandable closing means 8 within the fluid manifold system. The compressed gas supplied by the pressure unit 12 inflates the cavity 10 of the expandable closing means 8 until the fluid-tight shell 9 is pressed against the inner walls of the fluid manifold system. In the pressurized state, the expandable closing means 8 seals the part of the fluid manifold system where the expandable closing means 8 is placed preventing electrolyte solution to pass.

In the depressurized state that is shown in Figure 3, the expandable closing means 8 is deflated so that the cross-section of the expandable closing means 8 does not block passage of electrolyte solution through the fluid manifold system. In this case, no pressure is applied to the inner walls of the fluid-tight shell 9 of the expandable closing means 8. The fluid-tight shell 9 retracts into a relaxed state that is shown in Figure 3.

The material of the fluid-tight shell 9 is elastic so that it expands under pressure into the pressurized state shown in Figure 2. The fluid-tight shell 9 of the expandable closing means 8 is manufactured from hypalon. It could also be EPDM or other materials being elastic, UV-, temperature- and ageing-resistant as well as tear-resistant material. Furthermore, it is an electric insulator.

The expandable closing means 8 further comprises ballast components 13. They are placed within the cavity 10 and are attached to the inner surface of the fluid-tight shell 9. Depending on the geometry of the fluid-tight shell 9, a ballast component 13 with a length just shorter than the expandable closing means 8 may be placed along length of the expandable closing means 8 as shown in Figure 1.

In another embodiment of the intervention, several ballast components 13 may be distributed along the length of the expandable closing means 8.

In the pressurized state, the expandable closing means 8 is pressed against the walls of the fluid manifold system so that it cannot be displaced. However, in the depressurized state, the expandable closing means 8 may flow within the fluid manifold system, for example forced by the electrolytic solution flowing within the fluid manifold system. In this case, the ballast components 13 weight the expandable closing means 8 down to hold them at the bottom of the fluid manifold system. Therefore, displacement of the expandable closing means 8 is prevented by the ballast components 13.

There are several possible arrangements of the expandable closing means 8 within the fluid manifold system. According to one arrangement, the expandable closing means 8 is arranged directly in front of an inlet 15 of an electrolytic cell 30. In this case, in the pressurized state of the expandable closing means 8, the passage of electrolytic solution into this cell 30 is prevented.

According to another arrangement, the expandable closing means 8 is arranged in the main conduit 6 of the fluid manifold system as shown in Figure 1. In this case, in the pressurized state of this expandable closing means 8, passage of electrolyte solution to several fluid conduits 7 or to all of these fluid conduits 7 may be prevented.

The electrolysis unit 20 can be brought into an active and an inactive state:
In the active state, a current between anode 1 and cathode 2 is applied for the electrolysis process. In this case, the expandable closing means 8 is in the depressurized state as shown in Figure 3. Ballast components 13 hold the deflated expandable closing means 8 on the lower side of the main conduit 6 or the fluid conduits 7 in an outstretched condition. The main conduits 6 or the fluid conduits 7 are passable by the electrolytic solution.

In the deactivated state, no current is present. The pressure unit 12 has applied pressure to the cavity 10 of the expandable closing means 8 so that it is brought into the pressurized state as shown in Figure 2. In this case, electrolyte solution may not pass through the fluid manifold system where the expandable closing means 8 is placed. Either passage of the main conduit 6 is blocked or passage of one or more fluid conduits 7 is/are blocked.

In the following, an embodiment of the process of the present invention is described with reference to Figure 3, wherein also further details of the embodiment of the electrolysis unit 20 are described. In particular, the electrolysis unit 20 described above is used for the embodiment of the process of the present invention.

For the process, the electrolysis unit 20 is connected to a solar panel that provides electricity to the electrolysis unit 20 for the electrolysis. The starting point of the process is an active state of the electrolysis unit 20 wherein oxygen and hydrogen are generated forced by the electricity provided by the solar panel. As described above, in this case, the expandable closing means 8 is placed within the main conduit 6. However, it is in the depressurized state so that the passage for the electrolytic solution is not blocked.

In step S1, the voltage provided by the solar panel is measured. In addition, the temperature of the electrolytic solution is measured. When the sun goes down, the solar panel cannot be used any more to generate the electricity required for electrolysis. Once a certain decrease of the electricity provided by the solar panel is detected, in step S2 a shutdown of the electrolysis unit 20 is initiated. In step S3, a polarization rectifier is maintained to be switched-on for a few hours (2-3 hours), the electrolytic cells 30 are filled with cold electrolyte solution until the temperature at a discharge header drops from 88 °C to 45-50 °C. After this, in step S4, the polarization rectifier is switched off and electrolyte circulation is stopped. When the polarization is switched-off, reverse currents can be formed from stray currents that flow through the fluid manifold system, which hydraulically connects all the electrolytic cells 30 of the electrolysis unit 20.

To avoid such stray currents that may damage an unprotected coating of anode 1 and cathode 2, the expandable closing means 8 is brought into a pressurized state. For this, in step S5, the pressure unit 12 is started and pumps nitrogen, alternatively air, from a tank through the hose 14 into the expandable closing means 8. The fluid-tight shell 9 is inflated and the volume of the cavity 10 increases, the cross section increases from a diameter of 25 to a diameter of 60 mm. A sufficient pressure to let the expandable closing means 8 completely expand into the main conduit 6 of the fluid manifold system is applied. The inflated expandable closing means 8 blocks the inlets to the fluid conduits 7 branching off to the individual cells 30. The cells 30 are hydraulically separated from each other so that no currents can flow through the electrolyte liquid conduit. Currents that can spread across the expandable closing means 8 are prevented by the use of an isolating material for the fluid-tight shell 9.

If the electrolysis unit 20 shall again be brought into an active state in order to generate oxygen and hydrogen, in step S6, the expandable closing means 8 is deflated by ejecting the nitrogen via a retraction valve of the pressure port 11 connected to the pressure unit 12. It shrinks back to the original size with smaller cross section and volume. During the active electrolysis process, this collapsed shell 9 of the expandable closing means 8 remains in the fluid manifold system. The ballast components 13 ensure that the collapsed shell is not driven around by the electrolyte solution that flows around it, but remains at the bottom of fluid manifold system, e.g. the main conduit 6.

In another embodiment, several expandable closing means 8 are used, pre-installed into the fluid conduits 7 leading from the main conduit 6 of the fluid manifold system to the individual cells 30. The material and structure of the fluid-tight shells 9 is identical to that described in the first embodiment. However, the expandable closing means 8 provides a smaller cross section, adapted to the narrower conduits. The pressure ports 11 of the individual closing means 8 are connected via a valve system allowing all expandable closing means 8 to be controlled simultaneously via one external pressure unit 12.

The fluid-tight shells 9 of the several expandable closing means 8 are inflated and the volume of the cavities 10 increase. A sufficient pressure is applied to let the expandable closing means 8 completely expand into the fluid conduits 7. The inflated expandable closing means 8 block all the individual fluid conduits 7. The electrolytic cells 30 are hydraulically separated from each other, thus no currents can flow through the electrolyte liquid conduit. Currents that can spread across the expandable closing means 8 are prevented by the use of an insulating material.

Before restarting the electrolyte flow in view of re-energizing the electrolysis unit 20, the expandable closing means 8 are deflated by ejecting the nitrogen. The pressure unit 12 depressurizes the expandable closing means 8. It pumps back the compressed nitrogen with the pressure unit 12 via a retraction valve of the pressure port. The expandable closing means 8 shrink back to their original size with smaller cross section and volume. The ballast components 13 ensure that the expandable closing means 8 remain in the fluid conduits 7.

### List of reference signs

- 1: Anode
- 2: Cathode
- 3: Ion exchange diaphragm
- 4: Anodic wall
- 5: Cathodic wall
- 6: Main conduit
- 7: Fluid conduits
- 8: Expandable closing means
- 9: Fluid tight shell
- 10: Cavity
- 11: Pressure port
- 12: Pressure unit
- 13: Ballast components
- 14: Hose
- 15: Inlet
- 20: Electrolysis unit
- 30: Electrolytic cell

## Claims

1. An electrolysis unit (20), comprising:
a plurality of electrolytic cells (30) each having an anode (1), a cathode (2) and an ion-exchange diaphragm (3) dividing the electrolytic cell (30) into an anodic and a cathodic compartment;
a fluid manifold system (6, 7) having fluid conduits (7) for feeding the electrolytic solution into the electrolytic cells (30) and for discharging the electrolytic solution out of the electrolytic cells (30);
an expandable closing means (8) having a fluid-tight shell (9) enclosing a cavity (10), said fluid-tight shell (9) having a pressure port (11); and
a pressure unit (12) connected with the pressure port (11) for pressurizing the cavity (10) so that the fluid-tight shell (9) expands and the volume of the cavity (10) increases;
wherein said expandable closing means (8) is arranged within the fluid manifold system (6, 7), so that the fluid manifold system (6, 7) is open for the passage of electrolytic solution if the expandable closing means (8) is in a depressurized state and the fluid manifold system (6, 7) is closed for the passage of electrolytic solution if the expandable closing means (8) is in a pressurized state.

2. The electrolysis unit (20) according to claim 1, wherein at least one fluid conduit (7) provides a fluid connection from one electrolytic cell (30) to another electrolytic cell (30).

3. The electrolysis unit (20) according to claim 2, wherein the expandable closing means (8) is arranged in at least one of the fluid conduits (7) directly in front of an inlet (15) of one of the electrolytic cells (30).

4. The electrolysis unit (20) according to claim 1, wherein the fluid manifold system (6, 7) comprises a main conduit (6) wherein at least one fluid conduit (7) branches off from the main conduit (6) and wherein said expandable closing means (8) is arranged in the main conduit (6).

5. The electrolysis unit (20) according to any of the preceding claims, wherein the expandable closing means (8) comprises ballast components (13) holding the expandable closing means (8) in the depressurized state at the bottom of the fluid manifold system (6, 7).

6. The electrolysis unit (20) according to any of the preceding claims, wherein the fluid-tight shell (9) of the expandable closing means (8) is an electric isolator.

7. The electrolysis unit (20) according to any of the preceding claims, wherein the pressure unit (12) is designed to depressurize the expandable closing means (8) by pumping gas out of the cavity (10) via a retraction valve of the pressure port (11).

8. The electrolysis unit (20) according to any of the preceding claims, wherein the electrolysis unit is an atmospheric electrolyzer and/or electrolyzer with pressurized stack design with internal manifolds wherein the expandable closing means (8) is placed into the fluid manifold system (6, 7) of the atmospheric electrolyzer and/or the electrolyzer with pressurized stack design.

9. Process for the operation of an electrolysis unit (20) comprising the following simultaneous or sequential steps:
feeding an electrolytic solution via a fluid manifold system (6, 7) with fluid conduits (7) into an electrolytic cell (30) and discharging the electrolytic solution out of the electrolytic cells (30); and
pressurizing an expandable closing means (8) being placed into the fluid manifold system (6, 7), wherein said expandable closing means (8) has a fluid-tight shell (9) enclosing a cavity (10) and having a pressure port (11), via the pressure port (11) using a pressure unit (12) that is connected to the pressure port (11) so that the fluid-tight shell (9) expands and the volume of the cavity (10) increases until the expandable closing means (8) is in a pressurized state in which the fluid manifold system (6, 7) is closed for the passage of electrolytic solution.

10. Process according to claim 9, wherein the expandable closing means (8) is brought in the pressurized state during shutdown of the electrolysis unit (20).

11. Process according to claim 9 or 10, wherein the cavity (10) of the expandable closing means (8) is pressurized with compressed nitrogen or compressed air.

12. Process according to any of claims 9 or 11, wherein the expandable closing means (8) is deflated during activity of the electrolysis unit (20) thereby bringing it in a depressurized state in which the fluid manifold system (6, 7) is open for the passage of electrolytic solution.

13. Process according to claim 12, wherein the expandable closing means (8) remains in the fluid conduit (7) during activity of the electrolysis unit (20).

14. Process according to any of claims 9 or 13, wherein
the temperature of the electrolytic solution is measured,
for a shutdown of the electrolysis unit (20) the pressure unit (12) is activated unit after the electrolyte solution has cooled down below a defined temperature;
the expandable closing means (8) is inflated until a certain threshold pressure value is reached;
for an operation of the electrolysis unit (20) the expandable closing means (8) is deflated; and
the electrolysis process is started.

15. Process according to claim 9, wherein
the electrolysis unit (20) is operated with an electrolytic solution of alkaline water.
